# EUROPEAN PATENT APPLICATION

(11) **EP 3 043 509 A1**
(43) Date of publication of application: **13.07.2016**
(21) Application number: 14787472.1
(22) Date of filing: 09.05.2014
(51) Int. Cl.: H04L 9/32

(54) **PORTAL AUTHENTICATION METHOD, BROADBAND NETWORK GATEWAY (BNG), PORTAL SERVER AND SYSTEM**

(30) Priority: 04.09.2013 CN 201310399004
(71) Applicant: ZTE Corporation, Shenzhen, Guangdong 518057 (CN)
(72) Inventor: FAN, Liang, Shenzhen Guangdong 518057 (CN); WANG, Shuyi, Shenzhen Guangdong 518057 (CN); ZHU, Chengxu, Shenzhen Guangdong 518057 (CN); MAO, Wei, Shenzhen Guangdong 518057 (CN); YUAN, Bo, Shenzhen Guangdong 518057 (CN)
(74) Representative: Brevalex
(86) International application number: PCT/CN2014/077197
(87) International publication number: WO 2014/173335

(57) **Abstract**

Disclosed is a portal authentication method including: sending, by a portal server, an information query message to the Broadcast Network Gateway (BNG) currently accessed by a User Equipment (UE) after the portal server receives a Hyper Text Transport Protocol (HTTP) request sent from the UE; and collecting, by the BNG, the information of the UE according to the information query message sent from the portal server and feeding the collected information of the UE back to the portal server through a response message. A BNG, a portal server, a system and a computer storage medium are also disclosed.

## Description

### TECHNICAL FIELD

The present disclosure relates to mobile communications and in particular to a portal authentication method, a Broadband Network Gateway (BNG), a portal server, a system and a computer storage medium.

### BACKGROUND

With the rapid development of Internet applications and smart User Equipment (UE), Wireless Local Area Network (WLAN) has been very popular, covering many public places such as factories, schools and coffee houses, and WLAN users can access the Internet anytime anywhere through their UEs such as their mobile phones or computers to work or enjoy entertainment online. Accessing a network via a WLAN is one of the most important ways in which a user accesses network resources. As public demands for accessing the Internet via a WLAN increase continuously, the government and the operators have successively published public WLAN hotspot and hot area construction plans. A large-scale WLAN coverage has been realized in commercial centers and medium and large institutions in most cities and regions, which stimulates the frequency in which users make video call using their UEs via a WLAN and leads to a sharp growth in the number of WLAN UEs that are synchronously online.

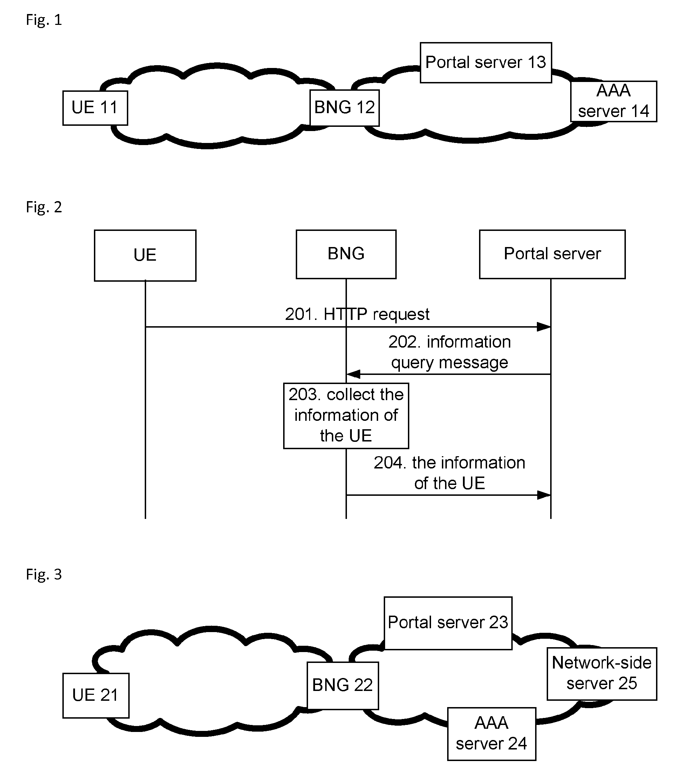

At present, the network access of a WLAN user is mainly controlled and authenticated/authorized using the following two methods: 802.1x authentication and portal authentication which is also called Web authentication. The latter is applied more widely in the existing networks because it can be applied not only to authenticating/authorizing a WLAN user before the WLAN user accesses a network but also to some wired access scenarios. As shown in Fig. 1, the basic architecture of the portal authentication system provided in the relevant art mainly includes: a UE 11, a user access gateway (BNG) 12, a portal server 13 and an Authentication Authorization and Accounting (AAA) server 14. The UE 11 interacts with the BNG 12 to acquire an Internet Protocol (IP) address, the BNG 12 redirects a Hyper Text Transport Protocol (HTTP) access request sent by a user for accessing the Internet to the portal server 13, and the portal server 13 provides a web portal authentication page for the user to input authentication/authorization information, for example, the name and the password of the user to authenticate and authorize the user through the interaction among the portal server 13, the AAA server 14 and the BNG 12.

The current portal server adopts a 'status' processing mechanism, that is, the portal server stores user status information which includes the authentication status of a user, that is, whether or not a user is authenticated, the online time of the user and the traffic of the user, and each portal server serves for a plurality of BNGs and consequentially stores a great amount of user status information. With the number of users increasing continuously and the popularization of new technologies such as IPv6, this portal authentication method has more and more problems.

First, lack of consideration is for the risk of failure. Second, lack of support is for IPv6. Last, this portal authentication method cannot meet the needs for some functions, for example, the pushing of the customized/personalized page and the mobile access of the user.

No effective solutions have been proposed to address the foregoing problems.

### SUMMARY

The present disclosure is intended to provide a portal authentication method, a BNG, a portal server, a system and a computer storage medium which are capable of avoiding the risk of the failure of portal authentication existing in the relevant art and are therefore adapted to new network environments such as an IPv6 network.

The technical solutions of the present disclosure are implemented as follows.

A portal authentication method is provided which includes the following steps:
after receiving an HTTP request sent from a UE, a portal server sends an information query message to a BNG currently accessed by the UE; and the BNG collects the information of the UE according to the information query message sent from the portal server and feeds the collected information of the UE back to the portal server through a response message.

In the method, the HTTP request includes: an HTTP connection establishment request from the UE, a UE metering information query request sent from the UE through an HTTP connection and an offline request from the UE.

In the method, the information query message is used to instruct the BNG to feed back the information of the UE, wherein the information of the UE includes at least one of: an IP address set of the UE, position information of the UE, metering information of the UE and an authentication status of the UE.

In the method, the information query message and the response message are encapsulated in a format of a portal protocol or a Remote Authentication Dial In User Service (RADIUS).

Preferably, the method further includes the following step:
after receiving the response message from the BNG, the portal server provides a corresponding page and/or corresponding information to the UE according to the HTTP request sent from the UE and the response message.

In the foregoing solutions, in a case where the UE is a roaming or mobile UE and an IP address of the UE is not changed after the UE is switched to the BNG, the method further includes the following step:
the BNG adds identification information thereof into a Uniform Resource Locator (URL) field of the HTTP request sent by the UE for accessing the portal server.

In the method, the identification information of the BNG is a system name of the BNG.

A portal authentication method is provided which includes the following step:
after receiving an HTTP request sent from a UE, a portal server sends an information query message to a BNG currently accessed by the UE, wherein
the information query message is used for the BNG to collect the information of the UE and to feed the collected information of the UE back to the portal server through a response message.

In the method, the HTTP request includes: an HTTP connection establishment request from the UE, a UE metering information query request sent from the UE through an HTTP connection and an offline request from the UE.

In the method, the information query message is used to instruct the BNG to feed back the information of the UE, wherein the information of the UE includes at least one of: an IP address set of the UE, position information of the UE, metering information of the UE and an authentication status of the UE.

In the method, the information query message and the response message are encapsulated in a format of a portal protocol or an RADIUS.

The method further includes the following step:
after receiving the response message from the BNG, the portal server provides a corresponding page and/or corresponding information to the UE according to the HTTP request sent from the UE and the response message.

In the method, the identification information of the BNG is a system name of the BNG.

A BNG is also provided which includes a collection processing module and a first sending module, wherein
the collection processing module is configured to collect information of a UE according to an information query message sent from a portal server; and
the first sending module is configured to feed the information of the UE collected by the collection processing module back to the portal server through a response message.

In a case where the UE is a roaming or mobile UE and an IP address of the UE is not changed after the UE is switched to the BNG, the collection processing module is further configured to add an identification information of the BNG into a URL field of an HTTP request sent by the UE for accessing the portal server.

A portal server is also provided which includes: a receiving module configured to receive an HTTP request sent from a UE; and
a second sending module configured to send an information query message to a BNG currently accessed by the UE.

In the portal server, the receiving module is further configured to receive a response message from the BNG; and
the second sending module is configured to provide a corresponding page and/or corresponding information to the UE according to the HTTP request sent from the UE and the response message.

A portal authentication system is also provided which includes a UE, a BNG and a portal server, wherein
the BNG is configured to collect information of the UE according to an information query message sent from the portal server and feed the collected information of the UE back to the portal server through a response message; and
the portal server is configured to send the information query message to the BNG currently accessed by the UE after receiving an HTTP request sent from the UE.

In the portal authentication system, the portal server is further configured to provide a corresponding page and/or corresponding information to the UE according to the HTTP request sent from the UE and the response message sent from the BNG after receiving the response message.

The BNG is further configured to add identification information thereof into a URL field of the HTTP request sent by the UE for accessing the portal server in the case that the UE is a roaming or mobile UE and an IP address of the UE is not changed after the UE is switched to the BNG.

A computer storage medium is also provided having computer-executable instructions stored therein, the computer-executable instructions configured to execute any of the foregoing portal authentication methods.

According to the present disclosure, after receiving an HTTP request sent from a UE, a portal server sends an information query message to a BNG currently accessed by the UE; and the BNG collects the information of the UE according to the information query message sent from the portal server and feeds the collected information of the UE back to the portal server through a response message. It can be seen from the above that due to the adoption of a 'non-status' processing mechanism, that is, a mechanism in which user status information is not stored in real time, an address acquisition flow and an authentication flow of the UE are totally unchanged before and after the restart of the BNG, thus avoiding a series of problems in the relevant art. For example, the UE status information stored in a portal server is different from that stored in the BNG after the restart of the BNG recovered from a fault, resulting in inaccessibility of the UE to a network.

### BRIEF DESCRIPTION OF THE DRAWINGS

Fig. 1 is a schematic diagram illustrating the basic structure of the portal authentication system according to the relevant art;
Fig. 2 is a schematic diagram 1 illustrating the implementation flow of the portal authentication method according to an embodiment of the present disclosure;
Fig. 3 is a schematic diagram 1 illustrating the network topology of the portal authentication system according to an embodiment of the present disclosure;
Fig. 4 is a schematic diagram 1 illustrating the implementation flow of the portal authentication according to an embodiment of the present disclosure;
Fig. 5 is a schematic diagram 2 illustrating the network topology of the portal authentication system according to an embodiment of the present disclosure;
Fig. 6 is a schematic diagram 2 illustrating the implementation flow of the portal authentication according to an embodiment of the present disclosure;
Fig. 7 is a schematic diagram 3 illustrating the network topology of the portal authentication system according to an embodiment of the present disclosure;
Fig. 8 is a schematic diagram 3 illustrating the implementation flow of the portal authentication according to an embodiment of the present disclosure;
Fig. 9 is a schematic diagram illustrating the structure of the BNG according to an embodiment of the present disclosure;
Fig. 10 is a schematic diagram illustrating the structure of the portal server according to an embodiment of the present disclosure; and
Fig. 11 is a schematic diagram 4 illustrating the network topology of the portal authentication system according to an embodiment of the present disclosure.

### DETAILED DESCRIPTION

The object, the technical solution and the advantages of the present disclosure will become more apparent from the following detailed description of specific embodiments in conjunction with accompanying drawings. It should be appreciated that embodiments of the present disclosure and the features thereof can be combined with each other if no conflict is caused.

During the process of implementing the invention, the inventors find that the portal authentication provided in the relevant art has the following problems.

First, lack of consideration is for the risk of failure. At present, since a great amount of online user information on a plurality of BNGs is synchronously stored in a portal server and there is no mechanism for the real-time online user information synchronization of the portal server and the BNGs, the portal server cannot clean the status information of users in real time after a BNG occurs a fault and then is restarted rapidly. As a consequence, a user cannot access a network because the user information stored in the portal server is different from the user information stored in the BNG. For example, if an online user managed by the portal server is not offline successfully, then the restart of a BNG will assign the user with a new IP address and reset the status of the user to be 'unauthenticated'. If the user is assigned with the same IP address, then the portal server considers the user to be online when the BNG redirects an HTTP request of the user to the portal server and therefore directly pushes an authentication success page to the user but not provides an authentication page for the user to input a user name and a password. Consequentially, the user cannot access a network successfully and the state of the user presented on the BNG is always 'unauthenticated.'

Second, lack of support is for IPv6. Since the identifier of a user stored in the current portal server is the IP address of the user while a user may have a plurality of IPv6 addresses and dynamically release or apply one or more of these addresses in a new network environment such as an IPv6 network, if an IPv6 user who is authenticated after the HTTP request initially initiated by the IPv6 user is redirected to a portal server submits an offline request by accessing the portal server using another IP address, the offline flow of the user cannot be completed due to the absence of a record on the authentication of the another IP address in the portal server, leading to a plurality of problems such as a continuous charging the user.

In addition to the foregoing problems, the current portal authentication method is also incapable of meeting the needs for certain functions, for example, the pushing of a customized/personalizedized page and the mobile access of a user.

Fig. 2 is a schematic diagram illustrating a portal authentication method according to an embodiment of the present disclosure, and as shown in Fig. 2, the portal authentication method includes the following steps.

Step 201: a portal server receives an HTTP request sent from a UE.

Herein, the HTTP request includes: an HTTP connection establishment request from the UE, a UE metering information query request sent from the UE through an HTTP connection and an offline request from the UE, wherein the metering information includes duration and traffic.

Step 202: the portal server sends an information query message to the BNG currently accessed by the UE.

Herein, the information query message is used to instruct the BNG to feed back the various information of the UE, wherein the information of the UE includes at least one of: the IP address set (each IP address) of the UE, the position information of the UE, the metering information of the UE and the authentication status of the UE.

Step 203: the BNG collects the information of the UE according to the information query message sent from the portal server.

Step 204: the BNG feeds the collected information back to the portal server through a response message.

As an embodiment, the method further includes a step of providing, by the portal server, a corresponding page and/or corresponding information to the UE according to the HTTP request sent from the UE and the response message after receiving the response message from the BNG.

As an embodiment, the information query message and the response message are encapsulated in the format of a portal protocol or an RADIUS.

As an embodiment, if the UE is a roaming UE (a UE in a roaming access scenario) or a mobile UE (a UE in a mobile access scenario) and the IP address of the UE is not changed after the UE is switched to the BNG, the method further includes the following step of:
adding, by the BNG, the identification information thereof into the URL field of the HTTP request sent by the UE for accessing the portal server.

As an embodiment, the identification information of the BNG is the system name of the BNG.

The portal authentication method is described below in detail in combination with actual application scenarios.

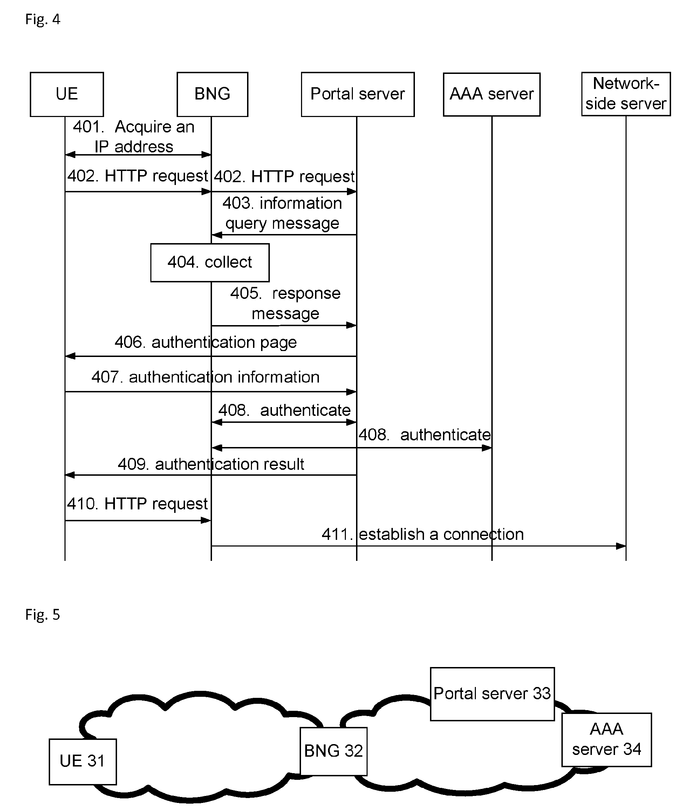

The authentication of a UE disclosed herein includes the pushing of a customized/personalized page, and as shown in Fig. 3, the network topology of the portal authentication system involved in an embodiment of the present disclosure includes a UE 21, a BNG 22, a portal server 23, an AAA server 24 and a network-side server 25. Fig. 4 is a schematic diagram illustrating the implementation flow of a portal authentication implemented in an embodiment of the present disclosure corresponding to the portal authentication system shown in Fig. 3. As shown in Fig. 4, the portal authentication includes the following steps.

Step 401: a UE and a BNG interact with each other to acquire IP addresses from each other.

Step 402: the UE initiates an HTTP request aiming at the network-side server, and the BNG redirects the HTTP request to a portal server after determining that the UE is not authenticated.

Step 403: the portal server sends an information query message to the BNG to request the BNG to feed back the IP address set and the authentication status of the UE.

Preferably, the portal server may further request the BNG to feed back the position information of the UE through the information query message.

Step 404: after receiving the information query message sent from the portal server, the BNG collects all the IP address information of the UE and the authentication status of the UE.

Herein, if the portal server also requests the BNG to feed back the position information of the UE through the information query message, then the BNG needs to collect the position information of the UE.

Step 405: the BNG sends a response message to the portal server to send the IP address set and the authentication status of the UE to the portal server.

Herein, if the portal server also requests the BNG to feed back the position information of the UE through the information query message, then the BNG also carries the position information of the UE in the response message and then sends the response message to the portal server.

Step 406: after receiving the response message, the portal server determines that the UE is not authenticated and then provides an authentication page to the UE to request the user to input authentication information such as a name and a password of the UE.

Preferably, the portal server establishes an HTTP connection with the UE before providing the authentication page.

Herein, the portal server may push a customized/personalized authentication page to the UE according to the position information of the UE contained in the response message, for example, push the information of the shops geographically nearby the UE as requested by merchants.

Step 407: the UE provides authentication information to the portal server, that is, inputs and submits authentication information on the authentication page for the UE.

Step 408: after receiving the authentication information, the portal server interacts with the AAA server and the BNG to complete the authentication of the UE.

Step 409: The portal server pushes an authentication result page to the UE.

If the UE is authenticated successfully, then the portal server pushes an authentication success page to the UE, otherwise, pushes an authentication failure page.

Preferably, the portal server pushes a customized/personalized authentication success page or authentication failure page according to the position information of the UE, for example, pushes the information of the shops geographically nearby the UE as requested by merchants or the address information of a business hall nearby or the position information of a self-service payment terminal if the UE fails to pass the authentication because of overdue charge.

Step 410: after passing the authentication, the UE sends a new HTTP request to access the network-side server.

Step 411: the BNG determines that the UE is authenticated and establishes an HTTP connection between the UE and the network-side server without redirecting the HTTP request of the UE.

It can be seen that due to the adoption of a 'non-status' processing mechanism, that is, a mechanism in which the user status information is not stored in real time, an address acquisition flow and an authentication flow of the UE are totally unchanged before and after the restart of the BNG, thus avoiding a series of problems in the relevant art. For example, the UE status information stored in a portal server is different from that stored in the BNG after the restart of the BNG recovered from a fault, resulting in inaccessibility of the UE to a network.

Herein, in a UE roaming access scenario where the UE after moving needs to be authenticated again, the BNG accessed by the moved UE initiates a forced push authentication again, and a server finds a corresponding BNG address to initiate a forced push authentication. In this case, if the IP address of the UE is not changed before and after the UE roams, then the portal server cannot find the BNG accessed by the moved UE according to the IP address of the UE. Thus, the portal server needs to store the mapping relationship between the system name of the BNG and the address of the BNG so as to locate the BNG accurately, and correspondingly, Step 402 further includes that:
the BNG carries the identification information thereof, for example, the system-name thereof, in the URL of the HTTP request of the UE when redirecting the HTTP request of the UE, and the portal server finds a corresponding BNG address according to the mapping relationship between the system name and the address of the BNG.

Preferably, in a UE mobile access scenario where the portal server cannot perceive the movement of an online UE because the IP address of the UE is not changed and it is not necessary to authenticate the UE again after the UE is moved, the BNG accessed by the moved UE needs to redirect an HTTP request initiated by the UE for accessing the portal server and carry the system name thereof in the URL of the request when the UE establishes a new HTTP connection with the portal server so as to implement the offline of the UE and the query of metering information.

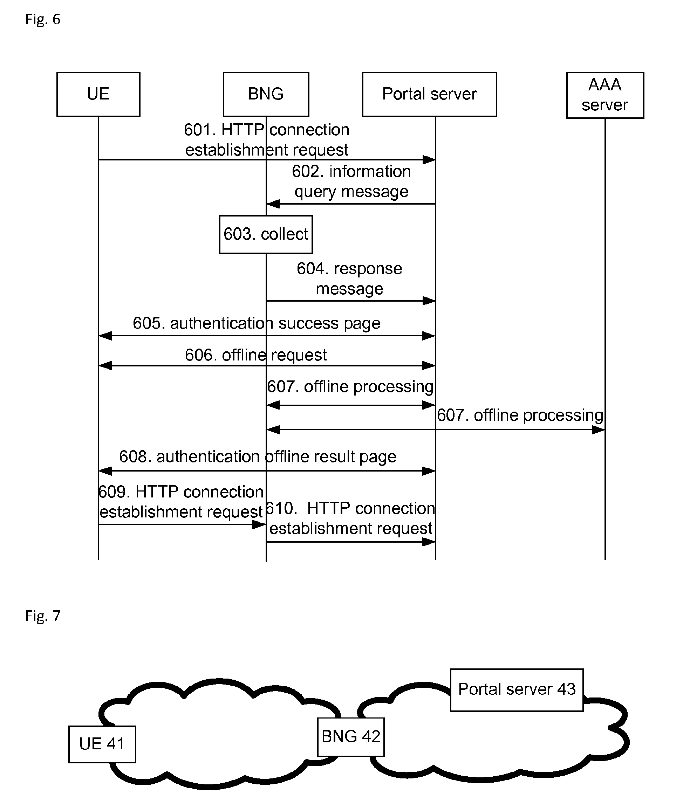

The execution of an offline operation by an IPv6 UE is also disclosed in the embodiment. As shown in the schematic diagram 2 of Fig. 5, the topology structure of the portal authentication system involved in an embodiment of the present disclosure includes a UE 31, a BNG 32, a portal server 33 and an AAA server 34. Fig. 6 is a schematic diagram 2 illustrating implementation flow of a portal authentication implemented in an embodiment of the present disclosure corresponding to the portal authentication system shown in Fig. 5, and as shown in Fig. 6, the portal authentication includes the following steps.

Step 601: the UE accesses the portal server using another IPv6 address IP2 and initiates a new HTTP connection establishment request.

The online authentication flow implemented in the embodiment is identical to the foregoing online authentication flow except that the IPv6 address used the foregoing online authentication flow is IP1.

Step 602: the portal server sends an information query message to the BNG to request the BNG to feed back the IP address set and the authentication status of the UE.

Step 603: after receiving the information query message from the portal server, the BNG collects all the IP address information of the UE and the authentication status of the UE.

Step 604: the BNG sends a response message to the portal server to send the IP address set and the authentication status of the UE to the portal server.

Step 605: after receiving the response message, the portal server determines that the UE is authenticated and then provides an authentication success page to the UE.

Preferably, the portal server establishes an HTTP connection with the UE before providing the authentication success page.

Step 606: the UE sends an offline request to the portal server, for example, the user clicks a button 'offline' on the authentication success page.

Step 607: after receiving the offline request, the portal server interacts with the AAA server and the BNG to complete the offline of the UE.

Step 608: the portal server pushes an authentication offline result page to the UE.

If the UE is successfully offline, then the portal server pushes an authentication offline success page to the UE, otherwise, pushes an authentication offline failure page.

Step 609: after being offline successfully, the UE accesses the network-side server again by initiating an HTTP connection establishment request.

Step 610: the BNG determines that the UE is not authenticated and redirects the HTTP connection establishment request to the portal server.

It can be seen that due to the adaptation of a 'non-status' processing mechanism, that is, a mechanism of not storing the status information of a user in real time, by the portal server in the embodiment, the portal server acquires the status information of the UE again when the UE accesses the portal server using another IP address to submit an offline request, thus facilitating the continuous network access of the UE and enabling the UE to adapt to new network environments such as an IPv6 network.

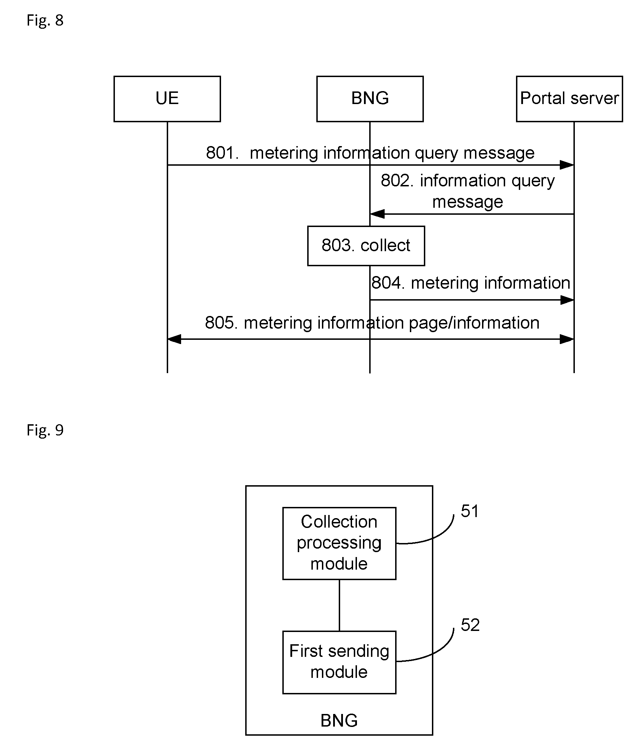

The query of UE metering information is also described in an embodiment of the present disclosure. As shown in the schematic diagram 3 of Fig. 7, the network topology of a portal authentication system involved in an embodiment of the present disclosure includes: a UE 41, a BNG 42 and a portal server 43. Fig. 8 is a schematic diagram 3 illustrating the implementation flow of a portal authentication implemented in an embodiment corresponding to the portal authentication system shown in Fig. 7. As shown in Fig. 8, the portal authentication includes the following steps.

Step 801: a UE sends a metering information query request in which duration and traffic are contained to the portal server, that is, the user of the UE inputs and submits authentication information on the authentication success page.

The online authentication flow implemented in the embodiment is identical to the foregoing online authentication flow.

Herein, the metering information query request is one of the HTTP request.

Preferably, the UE establishes an HTTP connection with the portal server again if the authentication page provided by the portal server is closed by the UE, wherein the establishment of the HTTP connection is identical to that described in Steps 601-605.

Step 802: the portal server sends an information query message to the BNG to request the BNG to feed back the metering information of the UE.

Step 803: after receiving the query message from the portal server, the BNG collects the metering information of the UE.

Step 804: the BNG sends a response message to the portal server to send the metering information of the UE to the portal server.

Step 805: after receiving the response message, the portal server provides a metering information page/metering information to the UE.

A BNG is also provided which, as shown in Fig. 9, includes a collection processing module 51 and a first sending module 52.

The collection processing module 51 is configured to collect the information of a UE according to an information query message sent from a portal server.

The first sending module 52 is configured to feed the information of the UE collected by the collection processing module 51 back to the portal server through a response message.

Herein, the collection processing module 51 may be implemented by the Central Processing Unit (CPU), the Digital Signal Processor (DSP) or the Field-Programmable Gate Array (FPGA) in the BNG. The first sending module 52 may be implemented by the microprocessor arranged in the BNG to support a corresponding network communication protocol stack such as an IPv6 protocol stack.

Preferably, as an embodiment, the collection processing module 51 is also configured to add the identification information of the BNG into the URL field of an HTTP request sent by the UE for accessing the portal server if the UE is a roaming UE or a mobile UE and the IP address of the UE is not changed after the UE is switched to the BNG..

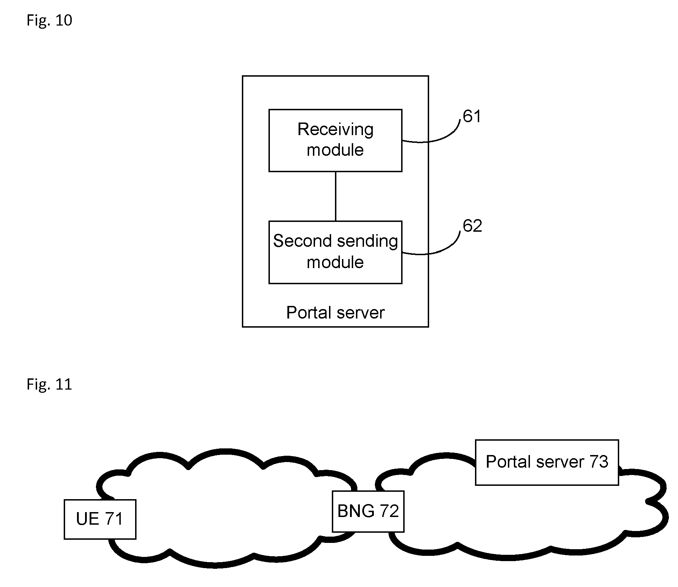

A portal server is also disclosed which, as shown in Fig. 10, includes:
a receiving module 61 configured to receive an HTTP request sent from a UE; and
a second sending module 62 configured to send an information query message to the BNG currently accessed by the UE.

Herein, the receiving module 61 and the second sending module 62 may be implemented by a microprocessor arranged in a portal server to support a corresponding network communication protocol stack such as an IPv6 protocol stack.

As an embodiment, the receiving module 61 is further configured to receive a response message from the BNG; and
the second sending module 62 is further configured to provide a corresponding page and/or corresponding information to the UE according to the HTTP request sent from the UE and the response message.

The receiving module 61 and the second sending module 62 may be implemented by a microprocessor arranged in a portal server to support a corresponding network communication protocol stack such as an IPv6 protocol stack.

A portal authentication system is also disclosed corresponding to the BNG shown in Fig. 9 and the portal server shown in Fig. 10. As shown in Fig. 11, the system includes a UE 71, a BNG 72 and a portal server 73.

The BNG 72 is configured to collect the information of the UE 71 according to an information query message sent from the portal server 73 and feed the collected information back to the portal server 73 through a response message.

The portal server 73 is configured to send an information query message to the BNG 72 currently accessed by the UE 71 after receiving an HTTP request from the UE 71.

The portal server 73 is further configured to provide a corresponding page and/or corresponding information to the UE according to the HTTP request sent from the UE and a response message sent from the BNG 72 after receiving the response message.

The BNG 72 is also configured to add the identification information of the BNG 72 into the URL field of the HTTP request sent by the UE 72 for accessing the portal server 73 if the UE 72 is a roaming or mobile UE and the IP address of the UE 72 is not changed after the UE 72 is switched to the BNG.

It can be seen from the BNG, the portal server and the system disclosed herein that due to the adoption of a 'non-status' processing mechanism, that is, a mechanism in which the user status information is not in real time, by the portal server, an address acquisition flow and an authentication flow of the UE are totally unchanged before and after the restart of a BNG, thus avoiding a series of problems in the relevant art. For example, the UE status information stored in a portal server is different from that stored in the BNG after the restart of the BNG recovered from a fault, resulting in inaccessibility of the UE to a network. In addition, as the portal server acquires the status information of a UE again when the UE accesses the portal server using another IP address to submit an offline request, the continuous network access of the UE is facilitated, which makes the UE adapt to a new network environment such as an IPv6 network.

It should be appreciated by those skilled in the art that all or a part of the steps of the embodiments of the foregoing methods can be executed by hardware related to program instructions, and the foregoing programs may be stored in a computer-readable memory medium including a mobile storage device, a Read-Only Memory (ROM), a Random Access Memory (RAM), a magnetic disk, a compact disk or another medium capable of storing program codes, and the steps of the embodiments of the foregoing methods are executed when the programs are executed.

Alternatively, if formed into software modules and sold or used as independent products, the assembled units disclosed herein may be stored in a computer-readable memory medium. Based on this understanding, the technical solutions disclosed herein or the improvements devised herein based on the prior art can be presented as software products which are stored in a memory medium and include a plurality of instructions to cause a computer device (e.g. a personal computer, a server or a network device) to execute each embodiment of the methods disclosed herein completely or partially. The memory medium includes: a mobile memory device, an ROM, an RAM, a magnetic disk, a compact disk or a medium capable of storing program codes.

The foregoing is preferred embodiments of the present disclosure, and is not intended to limit the scope of the present disclosure. It should be appreciated that a variety of modifications and improvements can be devised by those of ordinary skill in the art without departing from the spirit of the present disclosure and that the modifications and improvements shall fall within the protection scope of the present disclosure.

## Claims

1. A portal authentication method, comprising:
sending, by a portal server, an information query message to a Broadcast Network Gateway (BNG) currently accessed by a User Equipment (UE) after the portal server receives a Hyper Text Transport Protocol (HTTP) request sent from the UE; and
collecting, by the BNG, information of the UE according to the information query message sent from the portal server and feeding the collected information of the UE back to the portal server through a response message.

2. The method according to claim 1, wherein the HTTP request includes: an HTTP connection establishment request from the UE, a UE metering information query request sent from the UE through an HTTP connection and an offline request from the UE.

3. The method according to claim 1, wherein the information query message is configured to instruct the BNG to feed back the information of the UE, wherein the information of the UE includes at least one of: an IP address set of the UE, position information of the UE, metering information of the UE and an authentication status of the UE.

4. The method according to claim 1, wherein the information query message and the response message are encapsulated in a format of a portal protocol or a Remote Authentication Dial In User Service (RADIUS).

5. The method according to any one of claims 1 to 4, further comprising:
providing, by the portal server, a page and/or information to the UE according to the HTTP request sent from the UE and the response message sent from the BNG after the portal server receives the response message.

6. The method according to any one of claims 1 to 4, in a case where the UE is a roaming or mobile UE and an IP address of the UE is not changed after the UE is switched to the BNG, the method further comprises:
adding, by the BNG, identification information thereof into a Uniform Resource Locator (URL) field of the HTTP request sent by the UE for accessing the portal server.

7. The method according to claim 6, wherein the identification information of the BNG is a system name of the BNG.

8. A portal authentication method, comprising:
sending, by a portal server, an information query message to a Broadcast Network Gateway (BNG) currently accessed by a User Equipment (UE) after the portal server receives a Hyper Text Transport Protocol (HTTP) request sent from the UE, wherein
the information query message is configured for the BNG to collect information of the UE and to feed the collected information of the UE back to the portal server through a response message.

9. The method according to claim 8, wherein the HTTP request includes: an HTTP connection establishment request from the UE, a UE metering information query request sent from the UE through an HTTP connection and an offline request from the UE.

10. The method according to claim 8, wherein the information query message is configured to instruct the BNG to feed back the information of the UE, wherein the information of the UE includes at least one of: an IP address set of the UE, position information of the UE, metering information of the UE and an authentication status of the UE.

11. The method according to claim 8, wherein the information query message and the response message are encapsulated in a format of a portal protocol or a Remote Authentication Dial In User Service (RADIUS).

12. The method according to any one of claims 8 to 11, further comprising:
providing, by the portal server, a page and/or information to the UE according to the HTTP request sent from the UE and the response message after receiving the response message from the BNG.

13. The method according to claim 12, wherein identification information of the BNG is a system name of the BNG.

14. A Broadcast Network Gateway (BNG), comprising: a collection processing module and a first sending module, wherein
the collection processing module is configured to collect information of a User Equipment (UE) according to an information query message sent from a portal server; and
the first sending module is configured to feed the information of the UE collected by the collection processing module back to the portal server through a response message.

15. The BNG according to claim 14, wherein the collection processing module is further configured to add identification information of the BNG into a Uniform Resource Locator (URL) field of a Hyper Text Transport Protocol request sent by the UE for accessing the portal server in the case that the UE is a roaming or mobile UE and an IP address of the UE is not changed after the UE is switched to the BNG.

16. A portal server, comprising:
a receiving module configured to receive a Hyper Text Transport Protocol (HTTP) request sent from a User Equipment (UE); and
a second sending module configured to send an information query message to a Broadcast Network Gateway (BNG) currently accessed by the UE.

17. The portal server according to claim 16, wherein
the receiving module is further configured to receive a response message from the BNG; and
the second sending module is configured to provide a page and/or information to the UE according to the HTTP request sent from the UE and the response message.

18. A portal authentication system, comprising: a User Equipment (UE), a Broadcast Network Gateway (BNG) and a portal server, wherein
the BNG is configured to collect information of the UE according to an information query message sent from the portal server and feed the collected information of the UE back to the portal server through a response message; and
the portal server is configured to send the information query message to the BNG currently accessed by the UE after receiving a Hyper Text Transport Protocol (HTTP) request sent from the UE.

19. The system according to claim 18, wherein
the portal server is further configured to provide a page and/or information to the UE according to the HTTP request sent from the UE and the response message sent from the BNG after receiving the response message.

20. The system according to claim 18 or 19, wherein
the BNG is further configured to add identification information thereof in a Uniform Resource Locator (URL) field of the HTTP request sent by the UE for accessing the portal server in the case that the UE is a roaming or mobile UE and an IP address of the UE is not changed after the UE is switched to the BNG.

21. A computer storage medium having computer-executable instructions stored therein, the computer-executable instructions configured to execute the portal authentication method of any one of claims 1 to 7.

22. A computer storage medium having computer-executable instructions stored therein, the computer-executable instructions configured to execute the portal authentication method of any one of claims 8 to 13.
